# FASCICULE DE BREVET EUROPEEN

(11) **EP 4 115 204 B1**
(45) Date de publication et mention de la délivrance du brevet: **18.11.2026**
(21) Numéro de dépôt: 21702281.3
(22) Date de dépôt: 04.02.2021
(51) Int. Cl.: G01S 13/931, G01S 13/42, G01S 13/86

(54) **PROCÉDÉ DE DÉTECTION DE CIBLES PAR UN RADAR**
VERFAHREN ZUR RADARDETEKTION VON ZIELEN
METHOD FOR RADAR DETECTION OF TARGETS

(30) Priorité: 04.03.2020 FR 2002194
(43) Date de publication de la demande: 11.01.2023
(73) Titulaire: RENAULT s.a.s., 92100 Boulogne-Billancourt (FR)
(72) Inventeur: SOURIA, Charaf-Eddine, 78280 Guyancourt (FR)
(74) Mandataire: Renault Group
(86) Numéro de dépôt international: PCT/EP2021/052583
(87) Numéro de publication internationale: WO 2021/175532

(56) Documents cités:
- US-A1- 2015 323 649
- US-A1- 2018 120 842
- US-A1- 2018 341 012

## Description

L'invention concerne un procédé de détection de cibles par un radar. Elle porte aussi sur un procédé de guidage ou d'alerte d'un véhicule automobile qui met en œuvre un tel procédé de détection de cibles par un radar. L'invention porte encore sur un système de détection de cibles par un radar et un système plus global de détection de cibles par un radar et au moins un capteur. L'invention porte également sur un véhicule automobile comprenant un tel système plus global de détection de cibles.

Pour assister la conduite d'un véhicule automobile voire même guider un véhicule automobile de manière autonome, différents types de capteurs de perception sont utilisés. Parmi eux, le radar présente d'importantes qualités, dont la robustesse face aux conditions climatiques, une portée de détection supérieure à 200 mètres, et la capacité à détecter des cibles cachées. Un radar permet ainsi d'assister efficacement à la conduite d'un véhicule automobile, par la détection de cibles susceptibles d'interférer avec la trajectoire du véhicule automobile. Toutefois, les solutions existantes de détection des cibles par un radar ne sont pas suffisamment fiables. En effet, un radar détecte souvent des cibles inexistantes, appelées « cibles fantômes » ou « cibles fictives », du fait de nombreuses réflexions parasites des ondes radar. Le principal défi du radar est de différencier les cibles fantômes des vraies cibles.

Le but de l'invention est de fournir un dispositif et un procédé de détection de cibles par un radar dont le degré de fiabilité est amélioré, et notamment permet le guidage d'un véhicule autonome ou une alerte véhicule.

Le document US2018/120842 intitulé « Radar multipath processing » est connu de l'état de la technique.

L'invention est exposée dans le jeu de revendications joint.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement un ordinogramme d'un procédé de détection de cibles par un radar selon un mode de réalisation de l'invention.

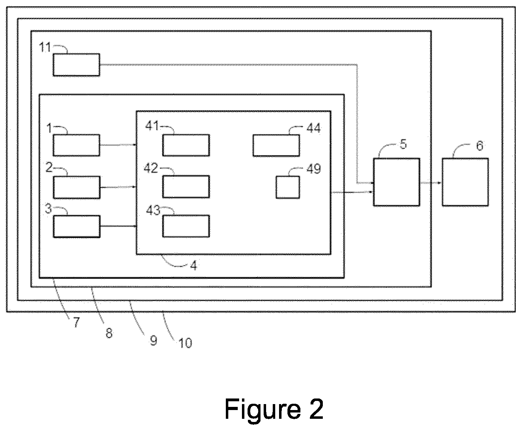

La figure 2 représente schématiquement un système de détection de cibles par un radar selon un mode de réalisation de l'invention.

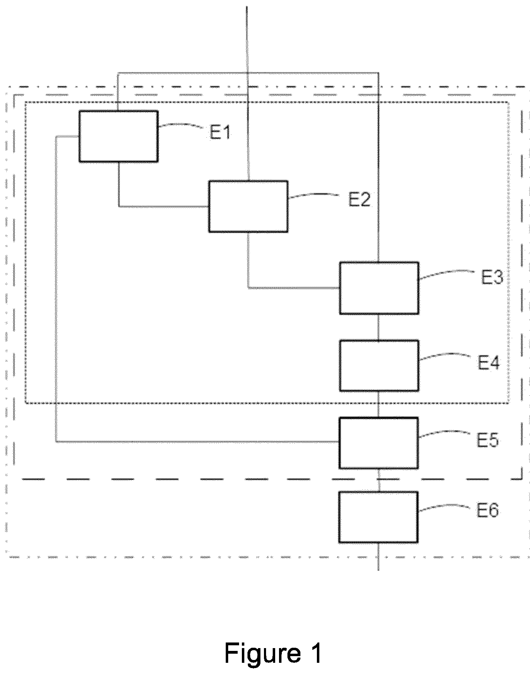

Un mode d'exécution du procédé de détection de cibles par un radar est décrit ci-après en référence à la figure 1.

Dans la suite de la description, nous dénommerons « cible radar » une cible détectée par un radar, « cible fictive » une cible radar détectée par erreur, et « cible réelle » une cible radar qui n'est pas fictive. L'objectif de l'invention est de déterminer au moins quelles cibles radar ont une forte probabilité d'être des cibles fictives.

Le procédé repose sur le calcul en temps réel d'un indice de confiance associé à chaque cible radar en fonction de la zone où se situe cette cible radar, plus particulièrement en fonction du niveau de réflexion des ondes électromagnétiques induit par l'environnement précis du radar.

Le procédé met en œuvre une première étape de détermination E1 de données numériques représentatives de l'environnement d'un radar 1 en temps réel. Pour cela, le procédé de détection de cibles par un radar utilise des données numériques issues d'une carte haute définition 3, et optionnellement des données issues dudit radar et optionnellement d'un ou plusieurs autres capteurs. Les données numériques issues d'une carte haute définition 3 peuvent être embarquées et stockées localement sur une mémoire électronique, ou être transmises par tout moyen de communication depuis un serveur distant.

La carte haute définition 3 décrit l'environnement routier, pouvant comprendre des informations de type largeur de route, hauteur de tunnel, type de barrière, position d'un pont, etc.

En complément, des données numériques complémentaires provenant du radar lui-même et/ou de tout autre capteur, permettent d'obtenir une information complète de l'environnement du radar. De telles données numériques complémentaires peuvent provenir de l'étape de fusion E5, qui sera décrite ultérieurement. Ces données numériques complémentaires comprennent notamment des éléments qui peuvent être absents de la carte haute définition 3, comme par exemple un camion stationné sur le bas-côté.

Dans cette étape, les formes géométriques des éléments composant l'environnement routier peuvent être simplifiées afin de ne garder que les propriétés géométriques impactant le modèle utilisé dans l'étape suivante E2.

Dans une deuxième étape, le procédé met en œuvre le calcul d'une probabilité d'existence E2 de cibles fictives en plusieurs zones de cet environnement du radar, c'est-à-dire à partir desdites données numériques représentatives de l'environnement du radar déterminé lors de la première étape.

Le calcul de la probabilité d'existence d'une cible fictive est effectué par modélisation des lois physiques qui induisent les réflexions des ondes radar sur l'environnement. Selon le mode de réalisation, ce calcul est fondé sur le modèle de tracés de rayons électromagnétiques. Ce calcul utilise de plus des données fournies par une base de données embarquée 2 comprenant des données numériques correspondant à des propriétés électromagnétiques des objets de la route. Ce calcul peut également utiliser les paramètres de configuration du radar 1, tels que les paramètres de radiofréquence en émission et en réception, ainsi que la configuration des antennes radar.

A l'issue de cette deuxième étape du procédé, l'environnement du radar 1 est ainsi cartographié en temps réel, en associant un niveau de probabilité d'existence de cibles fictives à différentes zones de cet environnement du radar.

Dans une troisième étape, le procédé calcule un indice de confiance fiable E3 associé à au moins une cible radar, et de préférence à chaque cible radar, transmise par le radar, en fonction de la probabilité d'existence de cibles fictives dans la zone de l'environnement du radar où se situe la au moins une cible radar.

Lors de cette troisième étape, le traitement porte sur tout ou partie des cibles radar issues du radar 1. Ce dernier transmet en sortie des données numériques représentatives de cibles radar détectées. Ces données numériques comprennent notamment au moins des informations sur la position de chaque cible radar et un indice de confiance initial associé à chaque cible radar. Cet indice de confiance initial de la cible radar a été établi par le radar 1 lui-même et n'est en pratique pas assez précis pour une identification suffisamment fiable des cibles fictives. Selon le procédé de l'invention, à la position de chaque cible radar correspond une probabilité d'existence d'une cible fictive, calculée lors de la deuxième étape. Cette probabilité est utilisée dans le calcul d'un nouvel indice de confiance plus fiable de la cible radar, dit indice de confiance fiable.

Le calcul mis en œuvre selon l'invention est :
- si la probabilité d'existence de cibles radar fictives dans la zone où la cible radar se situe est inférieure à un seuil donné (par exemple 0,5), alors l'indice de confiance fiable de la cible radar est égal à l'indice de confiance initial, c'est-à-dire que l'indice de confiance reste inchangé,
- sinon l'indice de confiance fiable sera fixé à une valeur strictement inférieure à l'indice de confiance initial. Par exemple, l'indice de confiance fiable pourra être calculé selon la formule : 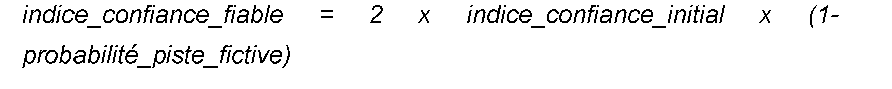 indice_confiance_fiable = 2 x indice_confiance_initial x (1-probabilité_piste_fictive)

Dans une quatrième étape de filtrage E4, les données numériques représentatives de cibles radar détectées issues directement du radar 1 sont comparées aux données émanant de l'étape E3. Lorsqu'il y a une correspondance entre une cible radar issue directement du radar 1 et une cible radar traitée par le procédé de l'invention (notamment sensiblement même localisation), la cible radar issue directement du radar est remplacée par la cible correspondante issue de l'étape E3, dont les données numériques associées ont été fiabilisées.

Cette quatrième étape de filtrage E4 comprend le stockage en mémoire des cibles radar issues de la troisième étape E3, afin de pouvoir les associer à une cible directement issue du radar.

Un mode d'exécution du procédé de détection de cibles par un radar et au moins un autre capteur est de plus décrit ci-après en référence à la figure 1. Il est en effet intéressant de pouvoir enrichir les informations issues d'un seul radar par des informations complémentaires du même environnement, détectées par un ou plusieurs autres capteurs, qui peuvent être d'une nature différente, par exemple une caméra.

Le procédé de détection de cibles par un radar et au moins un autre capteur intègre les étapes E1 à E4 précédemment décrites pour la détection fiabilisée des cibles radar du radar 1, ainsi qu'une étape supplémentaire de fusion E5.

L'objectif de l'étape de fusion E5 est d'utiliser les informations recueillies par les différents capteurs pour augmenter la précision des données relatives à chaque cible, notamment la fiabilité de l'indice de confiance de chaque cible.

L'étape de fusion E5 traite les cibles issues de la quatrième étape de filtrage E4 décrite précédemment, et les données issues d'un ou plusieurs autres capteurs, pouvant être, par exemple, de type radar et/ou caméra.

Pour chaque cible radar, l'étape de fusion E5 recalcule un indice de confiance, dit indice de confiance fusion, qui tient compte des informations issues de l'étape de filtrage E4, notamment l'indice de confiance fiable associé à une cible radar, et des données numériques concernant cette même cible issue d'un ou plusieurs autres capteurs.

L'étape E5 transmet les cibles radar ainsi recalculées, c'est à dire notamment la valeur de l'indice de confiance fusion, aux procédés utilisateurs de ces cibles radar, par exemple un système d'aide à la conduite automobile ou de conduite autonome.

Dans un mode de réalisation, l'étape de fusion E5 comprend une étape de comparaison de chaque indice de confiance fusion à un seuil minimum. Dans ce cas, l'étape de fusion E5 ne transmet en sortie, par exemple vers au moins un procédé utilisateur, que les données numériques associées aux cibles radar dont l'indice de confiance fusion est supérieur au seuil minimum. En sortie de cette étape de fusion E5, l'indice de confiance d'une cible radar détectée par un radar a donc été amélioré par un double traitement, consistant d'une part à prendre en compte les phénomènes de réflexion d'ondes radar par l'environnement du radar, et d'autre part à prendre en compte des données complémentaires provenant d'au moins un autre capteur. Il en résulte que l'indice de confiance associé à une cible radar est ainsi très fiable, de sorte qu'il permet de distinguer les cibles fictives des cibles radar réelles. Autrement dit, les cibles dites « cibles fusion » issues de cette étape de fusion E5 pourront donc être filtrées selon leur indice de confiance, dit indice de confiance fusion.

En remarque, parmi les cibles radar issues directement du radar 1, celles ne pouvant être associées à aucune cible issue de la troisième étape E3 sont de préférence transmises à la fusion des capteurs.

En remarque complémentaire, les données numériques issues de cette étape de fusion E5 peuvent aussi être exploitées dans la première étape de détermination E1 de données numériques représentatives de l'environnement du radar. De préférence, seules les cibles dont l'indice de confiance fusion est élevé sont transmises pour leur prise en compte dans cette première étape de détermination E1. Pour cela, il est de plus possible, par exemple, de fixer des critères portant sur un ou plusieurs indices de confiance fusion minimum relatifs auxdites cibles fusion traitées par cette première étape. Par exemple, il est possible d'imposer un premier indice de confiance fusion minimum élevé pour une cible fusion localisée par un seul capteur (par exemple 0,9), et un deuxième indice de confiance fusion minimum plus faible que le premier pour une cible fusion localisée par au moins deux capteurs (par exemple 0,5).

Un mode d'exécution du procédé de guidage ou d'alerte d'un véhicule automobile est de plus décrit ci-après en référence à la figure 1.

Le procédé intègre les étapes E1 à E5 précédemment décrites, ainsi qu'une étape supplémentaire d'aide à la conduite automobile ou de conduite autonome. Pour cela, le procédé comprend une étape de transmission E6 des données numériques représentatives des cibles identifiées par l'étape de fusion E5 à un calculateur d'un véhicule pour leur prise en compte dans le guidage ou la gestion d'alerte du véhicule. Dans ce guidage ou alerte, seules les cibles fusion dont l'indice de confiance fusion est supérieur à un seuil donné sont considérées.

L'étape de transmission E6 des données numériques représentatives de chaque cible identifiée à un calculateur d'un véhicule peut avoir pour finalité leur prise en compte par un système de guidage du véhicule ou bien un système d'information ou d'alerte au conducteur, par exemple pour afficher au conducteur des cibles sur un écran et/ou le prévenir d'un danger.

L'invention porte aussi sur un système de détection de cibles par un radar, un système de détection de cibles par un radar et au moins un autre capteur, ainsi que sur un véhicule automobile 10 intégrant un tel système.

Un exemple d'un véhicule automobile 10 équipé d'un système de détection de cibles 7 par un radar est décrit ci-après en référence à la figure 1. Le véhicule automobile 10 est un véhicule de n'importe quel type, notamment un véhicule de tourisme ou un véhicule utilitaire ou un robot véhicule.

Le système de détection de cibles 7 par un radar peut faire partie d'un système plus global de détection de cibles 8 par un radar et au moins un autre capteur, lui-même faisant partie d'un dispositif de guidage ou d'alerte 9 d'un véhicule automobile 10.

Selon le mode de réalisation, le système de détection de cibles 7 par un radar comprend principalement :
- un radar 1,
- une base de données embarquée 2 des propriétés électromagnétiques de tous les matériaux susceptibles d'être rencontrés dans l'environnement routier,
- une carte haute définition 3 contenant les informations liées à l'environnement routier,
- un calculateur 4.

Le système comprend de plus avantageusement une mémoire électronique 49 qui constitue un support d'enregistrement lisible par un ordinateur ou par le calculateur 4, comprenant des instructions qui, lorsqu'elles sont exécutées par l'ordinateur ou le calculateur, conduisent celui-ci à mettre en œuvre le procédé de détection de cibles décrit précédemment.

Tous ces composants sont reliés entre eux par des dispositifs de communication.

Le calculateur 4 permet d'exécuter un logiciel comprenant les modules suivants :
- un premier module 41 qui implémente l'étape de détermination E1 de l'environnement du véhicule,
- un deuxième module 42 qui implémente l'étape de calcul des probabilités d'existence E2 de cibles fictives dans l'environnement du véhicule,
- un troisième module 43 qui implémente la troisième étape de calcul d'un indice de confiance fiable E3 des cibles radar,
- un quatrième module 44 qui implémente une quatrième étape de filtrage E4 avant transmission des cibles radar à un dispositif de fusion des capteurs 5.

Le système plus global de détection de cibles 8 par un radar et au moins un autre capteur comprend principalement,
- au moins un système de détection de cibles 7 par un radar tel que décrit ci-dessus,
- au moins un autre capteur 11, par exemple de type radar ou caméra,
- un calculateur formant un dispositif de fusion 5 permettant d'exécuter un logiciel qui implémente l'étape de fusion E5 de données.

En remarque, les calculateurs 4 et 5 susmentionnés peuvent être distincts ou former un seul calculateur.

Le système de guidage ou d'alerte 9 de véhicule automobile comprend principalement,
- au moins un système plus global de détection de cibles 8 par un radar et au moins un autre capteur tel que décrit ci-dessus,
- un système d'aide à la conduite 6.

Ce système de guidage ou d'alerte peut former un système d'assistance à la conduite ou un système de guidage autonome d'un véhicule autonome.

Le véhicule automobile 10, en particulier le système de détection de cibles 7 par un radar, comprend de préférence tous les éléments matériels et/ou logiciels configurés de sorte à mettre en œuvre le procédé défini précédemment.

## Revendications

1. Procédé de détection de cibles par un radar (1) mise en œuvre par ordinateur, comprenant les étapes suivantes :
- la détermination (E1) de données numériques représentatives de l'environnement du radar (1) en temps réel, utilisant des données numériques issues d'une carte haute définition (3) décrivant l'environnement routier,
- le calcul d'une probabilité d'existence (E2) de cibles fictives en plusieurs zones de cet environnement du radar (1), reposant sur des équations de propagation des ondes électromagnétiques dans l'environnement du radar (1), qui sont fonction desdites données numériques représentatives de l'environnement du radar,
- la réception de données numériques correspondant à au moins une cible radar, transmises par le radar (1), comprenant des données numériques de localisation de l'au moins une cible radar et un indice de confiance initial,
- le calcul d'un indice de confiance fiable (E3) associé à la au moins une cible radar en fonction de la probabilité d'existence de cibles fictives dans la zone où la au moins une cible radar se situe, comprenant les sous-étapes suivantes :
• si la probabilité d'existence de cibles fictives dans la zone où la au moins une cible radar se situe est inférieure à un seuil donné, l'indice de confiance fiable est égal à l'indice de confiance initial,
• si la probabilité d'existence de cibles fictives dans la zone où la au moins une cible radar se situe est supérieure ou égale audit seuil donné, le nouvel indice de confiance fiable est strictement inférieur à l'indice de confiance initial.

2. Procédé selon la revendication précédente, **caractérisé en ce que** l'étape de détermination (E1) de données numériques représentatives de l'environnement du radar utilise des données issues dudit radar (1) et/ou **d'un ou** plusieurs autres capteurs (11).

3. Procédé de détection de cibles par un radar et au moins un autre capteur, **caractérisé en ce qu'**il comprend une première phase consistant à mettre en œuvre un procédé de détection de cibles par un radar selon l'une des revendications précédentes et **en ce qu'**il comprend une étape de fusion (E5) qui agrège les données numériques issues dudit procédé de détection de cibles par un radar et les données numériques complémentaires transmises par au moins un autre capteur, de sorte à générer en sortie des données numériques correspondant à au moins une cible, lesdites données numériques comprenant une localisation de la au moins une cible et un indice de confiance fusion de la au moins une cible.

4. Procédé selon la revendication précédente, **caractérisé en ce qu'**il comprend en outre l'étape suivante : si une cible issue de l'étape de fusion (E5) présente un indice de confiance fusion supérieur à un seuil prédéterminé, alors les données numériques associées à la au moins une cible sont transmises pour leur prise en compte lors de l'étape de détermination (E1) de données numériques représentatives de l'environnement du radar.

5. Procédé de guidage ou d'alerte d'un véhicule, **caractérisé en ce qu'**il comprend la mise en œuvre du procédé de détection de cibles par un radar selon l'une des revendications 1 à 2 ou **en ce qu'**il comprend la mise en œuvre du procédé de détection de cibles par un radar et au moins un autre capteur selon l'une des revendications 3 et 4, et **en ce qu'**il comprend une étape de transmission (E6) des données numériques représentatives de chaque cible identifiée à un calculateur d'un véhicule pour leur prise en compte dans le guidage ou l'alerte du véhicule.

6. Système de détection de cibles par un radar (7) comprenant au moins un radar (1) relié par un dispositif de communication à un calculateur (4) comprenant des éléments matériels et/ou logiciels (41, 42, 43, 44) mettant en œuvre le procédé selon l'une des revendications 1 à 2, notamment des éléments matériels et/ou logiciels conçus pour mettre en œuvre le procédé selon l'une des revendications 1 à 2.

7. Système plus global de détection de cibles (8) par un radar et au moins un capteur, **caractérisé en ce qu'**il comprend un système de détection de cibles par un radar (7) selon la revendication précédente, au moins un autre capteur (11) et un autre calculateur (5), ledit calculateur (4) et ledit autre calculateur (5) comprenant des éléments matériels et/ou logiciels mettant en œuvre le procédé selon l'une des revendications 3 ou 4, notamment des éléments matériels et/ou logiciels conçus pour mettre en œuvre le procédé selon l'une des revendications 3 ou 4.

8. Véhicule automobile (10), **caractérisé en ce qu'**il comprend un système d'aide à la conduite (6) et un système plus global de détection de cibles (8) par un radar et au moins un capteur selon la revendication précédente, et **en ce qu'**il comprend un calculateur mettant en œuvre un procédé de guidage ou d'alerte d'un véhicule selon la revendication 5.

## Patentansprüche

1. Verfahren zur Detektion von Zielen durch ein Radar (1), das von einem Computer implementiert wird und die folgenden Schritte umfasst:
- das Bestimmen (E1) von digitalen Daten, die für die Umgebung des Radars (1) repräsentativ sind, in Echtzeit unter Verwendung von digitalen Daten aus einer hochauflösenden Karte (3), die die Straßenumgebung beschreibt;
- das Berechnen (E2) einer Wahrscheinlichkeit des Vorhandenseins von fiktiven Zielen in mehreren Bereichen dieser Umgebung des Radars (1) auf der Grundlage von Gleichungen zur Ausbreitung der elektromagnetischen Wellen in der Umgebung des Radars (1), die von den für die Umgebung des Radars repräsentativen digitalen Daten abhängig sind;
- das Empfangen von digitalen Daten, die mindestens einem Radarziel entsprechen und von dem Radar (1) übertragen werden, umfassend digitale Daten zur Lokalisierung des mindestens eines Radarziels und einen anfänglichen Konfidenzindex,
- das Berechnen (E3) eines zuverlässigen Konfidenzindex, der dem mindestens einen Radarziel zugeordnet ist, in Abhängigkeit von der Wahrscheinlichkeit des Vorhandenseins von fiktiven Zielen in dem Bereich, in dem sich das mindestens eine Radarziel befindet, umfassend die folgenden Teilschritte:
• wenn die Wahrscheinlichkeit des Vorhandenseins von fiktiven Zielen in dem Bereich, in dem sich das mindestens eine Radarziel befindet, kleiner als ein gegebener Schwellenwert ist, ist der zuverlässige Konfidenzindex gleich dem anfänglichen Konfidenzindex;
• wenn die Wahrscheinlichkeit des Vorhandenseins von fiktiven Zielen in dem Bereich, in dem sich das mindestens eine Radarziel befindet, größer oder gleich dem gegebenen Schwellenwert ist, ist der neue zuverlässige Konfidenzindex strikt kleiner als der anfängliche Konfidenzindex.

2. Verfahren nach dem vorhergehenden Anspruch, **dadurch gekennzeichnet, dass** der Schritt (E1) des Bestimmens von digitalen Daten, die für die Umgebung des Radars repräsentativ sind, Daten aus dem Radar (1) und/oder aus einem oder mehreren anderen Sensoren (11) verwendet.

3. Verfahren zur Detektion von Zielen durch ein Radar und mindestens einen anderen Sensor, **dadurch gekennzeichnet, dass** es eine erste Phase umfasst, die darin besteht, ein Verfahren zur Detektion von Zielen durch ein Radar nach einem der vorhergehenden Ansprüche zu implementieren, und dass es einen Schritt (E5) zur Fusion umfasst, der die digitalen Daten aus dem Verfahren zur Detektion von Zielen durch ein Radar und die ergänzenden digitalen Daten, die von mindestens einem anderen Sensor übertragen werden, aggregiert, so dass im Ausgang digitale Daten erzeugt werden, die mindestens einem Ziel entsprechen, wobei die digitalen Daten eine Lokalisierung des mindestens einen Ziels und einen Fusionskonfidenzindex des mindestens einen Ziels umfassen.

4. Verfahren nach dem vorhergehenden Anspruch, **dadurch gekennzeichnet, dass** es ferner den folgenden Schritt umfasst: wenn ein Ziel aus dem Schritt (E5) zur Fusion einen Fusionskonfidenzindex aufweist, der größer als ein vorbestimmter Schwellenwert ist, dann werden die dem mindestens einen Ziel zugeordneten digitalen Daten zwecks ihrer Berücksichtigung bei dem Schritt (E1) des Bestimmens von digitalen Daten, die für die Umgebung des Radars repräsentativ sind, übertragen.

5. Verfahren zur Führung oder Warnung eines Fahrzeugs, **dadurch gekennzeichnet, dass** es die Implementierung des Verfahrens zur Detektion von Zielen durch ein Radar nach einem der Ansprüche 1 bis 2 umfasst oder dass es die Implementierung des Verfahrens zur Detektion von Zielen durch ein Radar und mindestens einen anderen Sensor nach einem der Ansprüche 3 und 4 umfasst und dass es einen Schritt (E6) des Übertragens der digitalen Daten, die für jedes identifizierte Ziel repräsentativ sind, an einen Rechner eines Fahrzeugs zwecks ihrer Berücksichtigung bei der Führung oder Warnung des Fahrzeugs umfasst.

6. System zur Detektion von Zielen durch ein Radar (7), umfassend mindestens ein Radar (1), das durch eine Kommunikationseinrichtung mit einem Rechner (4) verbunden ist, der Hardware- und/oder Softwareelemente (41, 42, 43, 44) umfasst, die das Verfahren nach einem der Ansprüche 1 bis 2 implementieren, insbesondere Hardware- und/oder Softwareelemente, die dazu ausgelegt sind, das Verfahren nach einem der Ansprüche 1 bis 2 zu implementieren.

7. Globaleres System zur Detektion von Zielen (8) durch ein Radar und mindestens einen Sensor, **dadurch gekennzeichnet, dass** es ein System zur Detektion von Zielen durch ein Radar (7) nach dem vorhergehenden Anspruch, mindestens einen anderen Sensor (11) und einen anderen Rechner (5) umfasst, wobei der Rechner (4) und der andere Rechner (5) Hardware- und/oder Softwareelemente umfassen, die das Verfahren nach einem der Ansprüche 3 oder 4 implementieren, insbesondere Hardware- und/oder Softwareelemente, die dazu ausgelegt sind, das Verfahren nach einem der Ansprüche 3 oder 4 zu implementieren.

8. Kraftfahrzeug (10), **dadurch gekennzeichnet, dass** es ein Fahrassistenzsystem (6) und ein globaleres System zur Detektion von Zielen (8) durch ein Radar und mindestens einen Sensor nach dem vorhergehenden Anspruch umfasst und dass es einen Rechner umfasst, der ein Verfahren zur Führung oder Warnung eines Fahrzeugs nach Anspruch 5 implementiert.

## Claims

1. Computer-implemented method for detecting targets using a radar (1), comprising the following steps:
- determining (E1) digital data representative of the environment of the radar (1) in real time, using digital data from a high-definition map (3) describing the road environment,
- calculating (E2) a probability of the presence of false targets in multiple regions of this environment of the radar (1), based on equations for the propagation of electromagnetic waves in the environment of the radar (1), which are dependent on said digital data representative of the environment of the radar,
- receiving digital data corresponding to at least one radar target, transmitted by the radar (1), comprising digital data on the location of the at least one radar target and an initial confidence index,
- calculating (E3) a reliable confidence index associated with the at least one radar target based on the probability of the presence of false targets in the region where the at least one radar target is located, comprising the following sub-steps:
• if the probability of the presence of false targets in the region where the at least one radar target is located is lower than a given threshold, the reliable confidence index is equal to the initial confidence index,
• if the probability of the presence of false targets in the region where the at least one radar target is located is higher than or equal to said given threshold, the new reliable confidence index is strictly lower than the initial confidence index.

2. Method according to the preceding claim, **characterized in that** the step (E1) of determining digital data representative of the environment of the radar uses data from said radar (1) and/or from one or more other sensors (11).

3. Method for detecting targets using a radar and at least one other sensor, **characterized in that** it comprises a first phase consisting in implementing a method for detecting targets using a radar according to either of the preceding claims and **in that** it comprises a fusion step (E5) that aggregates the digital data from said method for detecting targets using a radar and the additional digital data transmitted by at least one other sensor so as to output digital data corresponding to at least one target, said digital data comprising a location of the at least one target and a fusion confidence index for the at least one target.

4. Method according to the preceding claim, **characterized in that** it further comprises the following step: if a target from the fusion step (E5) has a fusion confidence index higher than a predetermined threshold, then the digital data associated with the at least one target are transmitted for them to be taken into account in the step (E1) of determining digital data representative of the environment of the radar.

5. Method for guiding or alerting a vehicle, **characterized in that** it comprises the implementation of the method for detecting targets using a radar according to either of Claims 1 and 2 or **in that** it comprises the implementation of the method for detecting targets using a radar and at least one other sensor according to either of Claims 3 and 4, and **in that** it comprises a step (E6) of transmitting the digital data representative of each identified target to a computer of a vehicle for them to be taken into account in the guiding or alerting of the vehicle.

6. System (7) for detecting targets using a radar, comprising at least one radar (1) connected by a communication device to a computer (4) comprising hardware elements and/or software elements (41, 42, 43, 44) implementing the method according to either of Claims 1 and 2, in particular hardware elements and/or software elements designed to implement the method according to either of Claims 1 and 2.

7. More comprehensive system (8) for detecting targets using a radar and at least one sensor, **characterized in that** it comprises a system (7) for detecting targets using a radar according to the preceding claim, at least one other sensor (11) and another computer (5), said computer (4) and said other computer (5) comprising hardware elements and/or software elements implementing the method according to either of Claims 3 and 4, in particular hardware elements and/or software elements designed to implement the method according to either of Claims 3 and 4.

8. Motor vehicle (10), **characterized in that** it comprises a driving assistance system (6) and a more comprehensive system (8) for detecting targets using a radar and at least one sensor according to the preceding claim, and **in that** it comprises a computer implementing a method for guiding or alerting a vehicle according to Claim 5.
